# EUROPEAN PATENT SPECIFICATION

(11) **EP 3 557 823 B1**
(45) Date of publication and mention of the grant of the patent: **14.12.2022**
(21) Application number: 18167991.1
(22) Date of filing: 18.04.2018
(51) Int. Cl.: H04L 67/06, H04L 49/354

(54) **METHOD FOR MONITORING TRAFFIC BETWEEN NETWORK MEMBERS IN A NETWORK**
VERFAHREN ZUR ÜBERWACHUNG VON VERKEHR ZWISCHEN NETZWERKELEMENTEN IN EINEM NETZWERK
PROCÉDÉ DE SURVEILLANCE DE LA CIRCULATION ENTRE DES ÉLÉMENTS DE RÉSEAU DANS UN RÉSEAU

(43) Date of publication of application: 23.10.2019
(73) Proprietor: Robert Bosch GmbH, 70442 Stuttgart (DE)
(72) Inventor: Shukla, Siddharth, 21177 Malmö (SE); Sahlstroem, Mikael, 21424 Malmö (SE)

(56) References cited:
- US-A1- 2002 191 605
- US-A1- 2009 125 470
- US-A1- 2014 082 122

## Description

### Field of the invention

The present invention relates to a method for monitoring traffic between network members in a network as well as a computing unit and a computer program for performing the method.

### Background of the invention

So called content addressable memory (CAM) is a type of memory, which can search its entire content in one clock cycle, in the course of which the CAM searches by content and not by address. The CAM compares input search data against a table of stored data and returns the address of matching data.

A ternary content addressable memory (TCAM) has the ability to store and search three different inputs, 0, 1, and x, where x represents a so called "don't care" state. For example, a TCAM might have an entry such as "10xx0," where "x" indicates the "don't care" state. This entry will match any of the four search keys: "10000," "10010," "10100," or "10110." A binary content addressable memory can only store and search 0 or 1.

The use of a CAM in a network switch for monitoring traffic between network members in a network is described e.g. in EP patent application 17185250.2. Upon receiving a data transmission between two network members, the CAM compares this received data transmission with a stateful firewall rule from the stateful firewall state table stored in the CAM. Depending on a result of this comparison the received data transmission is allowed, denied, or transferred to a processor unit of the network switch for further evaluation.

It is desirable to further improve the use of content addressable memory (CAM), particularly ternary content addressable memory (TCAM) in firewalls, especially for the use in automotive networks.

US 2014/0082122 discloses access control lists include one or more rules that each define a condition and one or more actions to be performed if the condition is satisfied. The conditions may be stored on a ternary content-addressable memory (TCAM), which receives a portion of network traffic and compares different portions of a header to entries in the TCAM.

US 2002/0191605 discloses methods and apparatus for classifying data packets in data processing systems. A first packet classification method determines which of a plurality of predefined processing rules applies to a data packet, where each rule is associated with a range of possible data values.

### Disclosure of the invention

According to the invention a method for monitoring traffic between network members in a network as well as a computing unit and a computer program for performing the method with the features of the independent claims are proposed. Advantageous further developments form the subject matter of the dependent claims and of the subsequent description.

Different network members are connected with a network switch, e.g. an Ethernet switch. Particularly, each network member is connected with a different port of the network switch. The network switch comprises a processor unit and a content addressable memory (CAM), particularly a ternary content addressable memory (TCAM). The processor unit can be a single central processing unit (CPU) or a multicore processor with two or more CPUs.

Rules concerning data transmissions between different network members are stored in the CAM. These rules particularly state whether data transmissions between different network members are allowed or denied. For this purpose, the rules especially comprise different entries concerning attributes of data transmissions, e.g. a source (IP) address, a destination (IP) address, a source port, a destination port, a communication protocol (e.g. TCP, UDP, ICMP), etc. Particularly, each rule also has a specific action as an entry. This action will particularly be performed if the attributes of a data transmission match all the entries of the corresponding rule. As this action the data transmission can especially be allowed, denied, or transferred to the processor unit for further evaluation. The rules stored in the CAM have a certain size or byte size and especially all rules have the same size. For example, each rule can have a size of 48 bytes.

Upon receiving a data transmission between two network members, i.e. data to be transmitted from one network member to another network member, the data to be transmitted are compared with the rules stored in the CAM and depending on a result of this comparison it is selected whether to allow the data transmission or to deny the data transmission or to transfer the data to be transmitted to the processor unit. Particularly, the CAM itself compares the data to be transmitted or its attributes with the entries of the rules. If all attributes of the data to be transmitted match the entries of one of the rules, the CAM particularly performs the corresponding action of this rule, i.e. allowing or denying the data transmission or transmitting the data to be transmitted to the CPU.

The present invention provides an improvement for the use of content addressable memory CAM, particularly ternary content addressable memory TCAM in firewalls, especially for the use in automotive networks. In particular, the present invention provides improvements for data transmissions with a size that does not equal the size of a CAM rule or an integer multiple of the size of a CAM rule, particularly twice the size of a CAM rule. Particularly, the invention remedies disadvantages for data transmissions of that kind being transferred between different network members.

As a general information it is mentioned that, if the data to be transmitted have a size or byte size smaller than a certain value depending on a size of the rules stored in the CAM, predetermined data are added to the data to be transmitted such that the data to be transmitted have a size equal to or greater than the certain value. Afterwards the data to be transmitted are compared with the rules stored in the CAM. Particularly, the CAM itself adds the predetermined data to the data to be transmitted. It is also possible that an element of the network switch adds the predetermined data, e.g. the CPU, a switch core, a memory access controller (MAC), etc.

If the size of the data to be transmitted is smaller than the size of the rules, the data to be transmitted are usually denied or dropped. In this case, there is the problem that data transmissions are denied just because the data to be transmitted have a too small size for the CAM rules although they actually should not have been denied because of their content. In order to overcome this disadvantage in the course of the present method data to be transmitted of that kind are padded to the size of a CAM rule with predetermined data such that the CAM can compare the data to be transmitted with its rules.

According to the invention, if the data to be transmitted have a size or byte size larger than a threshold depending on the size of the rules stored in the CAM and if it is selected to transfer the data to be transmitted to the processor unit, a predetermined identification number is assigned to the data to be transmitted. Afterwards, the data to be transmitted are particularly transferred to the CPU, which determines whether to allow or deny the data transmission. Particularly, if the data to be transmitted or their attributes match one of the rules or its entries and if the action of that corresponding rule is to transfer the data to be transmitted to the CPU, the CAM itself assigns the identification number to the data to be transmitted. However, it is also possible that an element of the network switch assigns the identification number, e.g. the CPU, a switch core, a memory access controller (MAC), etc.

If the size of the data to be transmitted is larger than the size of the rules, only an amount of the data to be transmitted with the size of the rules is evaluated by the CAM. If the data to be transmitted are transferred to the CPU for further evaluation, the CPU usually has to evaluate the entire data to be transmitted. Thus, also the amount of the data to be transmitted, which has already been evaluated by the CAM and compared with the rules, is usually re-evaluated by the CPU, leading to an increased latency of the CPU. In order to overcome this disadvantage, in the course of the present method the predetermined identification number is assigned to the data to be transmitted of that kind. By means of this identification number the CPU can particularly recognise which amount of the data to be transmitted has already been evaluated by the CAM and which amount has not yet been evaluated.

The present invention thus allows monitoring the traffic of data transmissions with different sizes independent of the CAM rule size, especially without the danger of denying data transmissions with a too small size and without increased latency when the CPU evaluates data to be transmitted with a too large size.

According to a particularly advantageous embodiment two or more rules in the CAM are combined to a combined rule. Since a combined rule of that kind has more entries than a single rule, more attributes of the received data to be transmitted can be evaluated by means of a combined rule. Thus, received data to be transmitted can be evaluated in greater detail by means of combined rules. The size of a combined rule equals the sum of the single rules' sizes, which are combined. Therefore, the size of a combined rule is particularly an integer multiple of the size of one single CAM rule.

According to a particularly preferred embodiment, two rules can be combined to a combined rule with twice the size of a single CAM rule. A combined rule of two single rules is hereafter also referred to a double rule. With a size of e.g. 48 bytes for a single rule, a double rule has a size of e.g. 96 bytes.

Particularly, single rules as well as combined rules can be provided in the CAM. This combination of rules yields the advantage of more flexibility when using a CAM for network switches since simpler single rules with smaller size as well as more complex rules with larger size can be provided. However, there are also disadvantages when it comes to the size of the data to be transmitted, particularly if the size of the data to be transmitted does not equal the size of a single rule or the size of a combined rule, i.e. the size of an integer multiple of a single rule.

Particularly when using both single and combined rules in the CAM, there is usually the danger of data transmissions being denied just because they have a too small size for the combined rules although they actually should not have been denied because of their content. For example, data to be transmitted of e.g. 66 bytes are evaluated by the CAM when using a single rule with e.g. 48 bytes but are usually denied or dropped when using a combined rule of e.g. 96 bytes. Since predetermined data are added to the data to be transmitted of that kind according to the first aspect of the present method, this problem can be overcome. Thus, the data to be transmitted of that kind are particularly padded to the size of a combined rule. For this purpose the certain value preferably equals the size of a combined rule. If single rules and double rules are provided in the CAM, the certain value preferably equals the size of two rules stored in the CAM.

When using both single and combined rules there is usually particularly the danger of high latency when transferring the data to be transmitted to the processor unit for further evaluation. If the size of the data to be transmitted is larger than the size of the rule, only an amount of data of the data to be transmitted with the size of the corresponding rules is evaluated by the CAM. For example when using a single rule of e.g. 48 bytes, only 48 bytes of the data to be transmitted are evaluated by the CAM, particularly the first 48 bytes of the data to be transmitted. If the data to be transmitted are transferred to the CPU for further evaluation, the CPU usually evaluates the entire data to be transmitted, leading to an increased latency of the CPU. Since the predetermined identification number is assigned to the data to be transmitted of that kind according to the second aspect of the present method, this problem can be overcome. By means of the identification number the CPU particularly evaluates only the part of the data to be transmitted not yet evaluated by the CAM, e.g. starting with the 49^{th} byte. The threshold thus preferably equals the size of one CAM rule, particularly if single rules and double rules are provided in the CAM according to a particularly preferred embodiment.

The threshold preferably equals the size of one rule stored in the CAM or equals the size of an integer multiple of one rule stored in the CAM. Thus, data to be transmitted with different sizes than the CAM rules or combined rules can effectively be monitored by means of the network switch.

According to particularly preferred embodiment, the threshold equals the size of two rules stored in the CAM. This threshold can especially be used if single rules as well as double rules are provided in the CAM.

According to a preferred embodiment the predetermined data can be just zeros or just ones or a random combination of zeros and ones. Preferably, the predetermined data can be random data. Particularly, when using a TCAM the entries of the TCAM rules concerning these predetermined data can be linked with an x, i.e. a "don't care" state. Thus, the specific content of the predetermined data is particularly not of relevance. It can therefore expediently be prevented that the data transmission is denied because the predetermined data do not match the corresponding entries of a TCAM rule. It can preferably be selected whether the addition of predetermined data is enabled or disabled.

Preferably, if the data to be transmitted have a size larger than the threshold, the predetermined identification number corresponds to a rule of the rules stored in the CAM, which matches the data to be transmitted. Thus, when transferring the data to be transmitted for further evaluation, by means of the identification number the CPU knows which rule has triggered this transfer. The CPU therefore especially knows that a certain amount of data of the data to be transmitted matches this rule and the CPU therefore especially only evaluates the remaining amount of data of the data to be transmitted. Thus, low latency for further evaluation of the data to be transmitted can be provided.

Advantageously, if the data to be transmitted have a size larger than the threshold, the predetermined identification number corresponds to an amount of data of the data to be transmitted with a size equal to the threshold. The identification number thus especially represents the amount of the data to be transmitted, which has already been evaluated by the CAM. When transferring the data to be transmitted to the CPU, by means of the identification number the CPU knows only to evaluate the remaining amount of data of the data to be transmitted, leading to a low latency for further evaluation.

Preferably, if the data to be transmitted have a size larger than the threshold, the predetermined identification number corresponds to an amount of data of the data to be transmitted which is compared with the rules of the CAM. This amount of data particularly has a size equal to the threshold. Thus, by means of the identification number the CPU especially knows which part of the data to be transmitted has already been evaluated by the CAM and especially only evaluates the remaining part of the data to be transmitted, leading to a low latency for further evaluation.

Advantageously, if the data to be transmitted have a size larger than the threshold, by means of the identification number the processor unit further evaluates an amount of data of the data to be transmitted which has not been compared with the rules stored in the CAM. Particularly, this amount of data has a size equal to the total size of the data to be transmitted minus the threshold. Thus, the further evaluation can be performed with low latency.

Preferably, if the data to be transmitted have a size larger than the threshold, a predetermined amount of data of the data to be transmitted is replaced with the predetermined identification number. Particularly, certain attributes, fields or entries of the data to be transmitted are replaced with the identification number. Particularly, before evaluating the entire data to be transmitted, the CPU can first of all evaluate the corresponding attribute or field corresponding to the predetermined amount of data. If this attribute or field comprises the predetermined identification number, the CPU particularly knows only to evaluate the amount of the data to be transmitted, which has not yet been evaluated by the CAM. If the attribute or field does not comprises a predetermined identification number, the CPU particularly knows, that the data to be transmitted do not match any of the rules stored in the CAM and is especially instructed to evaluate the entire data to be transmitted. Preferably, after further evaluating the data to be transmitted and particularly if the data transmission is allowed, the amount of data, which has been replaced with the predetermined identification number, is restored.

Advantageously, if the data to be transmitted have a size larger than the threshold, configuration data are provided correlating predetermined identification numbers with rules stored in the CAM. Thus, when the data to be transmitted are transferred to the CPU for further evaluation, by reading the identification number and by means of the configuration data, the CPU knows determine which rule of the CAM has triggered the further evaluation and thus particularly which amount of the data to be transmitted has already been evaluated by the CAM.

This configuration data can e.g. be provided as a table, a configuration file, as a JSON (JavaScript Object Notation) file, etc. The configuration data can especially be stored in a memory unit of the network switch like a flash memory, EEPROM, etc., or particularly in an internal memory of the CPU, e.g. register.

Particularly, the configuration data can be created during a configuration phase of the network switch or the network. Expediently, also the CAM rules can be created during this configuration phase and can be stored it the CAM. For this purpose, a whitelist of allowed communications and allowed data transmissions between different network members can particularly be used. For all the entries in the whitelist of allowed data transmissions a corresponding rule is particularly stored in the CAM. If, however, two or more entries in the whitelist yield substantially identical rules, only one rule can be stored in the CAM representing these data transmissions.

According to a particularly advantageous embodiment, the content addressable memory (CAM) is a ternary content addressable memory (TCAM). By its ability to search itself by content and not by address, the CAM can compare attributes of the data to be transmitted as input search data against a table of stored data, i.e. stored attributes of data to be transmitted in the form of rules. By means of a ternary content addressable memory (TCAM) certain attributes of the data to be transmitted can particularly be associated with the "don't care" states of the TCAM.

The traffic monitoring according to the present invention can be used for different kinds of networks. The present invention is particularly preferred for the use in a safety critical network like an automotive network, especially with complex electric-electronic-architecture (E/E-architecture). Particularly, by means of this automotive network, different components of a vehicle are connected with each other. The network members can e.g. be ECUs, sensors or actuators of the vehicle. Particularly, also network members outside of the vehicle can be connected with the network switch and thus with the automotive network, e.g. an external server or a cloud.

According to an advantageous embodiment, the network members can be different subdomains or particularly Virtual Local Area Networks (VLAN). A subdomain or VLAN of that kind can comprise different components, which are connected with each other by a communication link, e.g. Ethernet, CAN, LIN, etc. Different subdomains or VLANs thus can have different communication links. Therefore, an appearance of multiple networks can be created while just having one physical network. This way, VLANs can keep network applications separate despite expediently being connected to the same physical network and particularly without requiring multiple sets of cabling and networking devices to be deployed. A VLAN can especially be connected to one or more ports of the network switch. In the course of so called domain controlled architecture, these different subdomains or VLANs are connected with each other by means of the network switch. VLANs of that kind can preferably be implemented in an automotive network, wherein each VLAN can e.g. comprise ECUs, sensors or actuators.

With automotive networks becoming more and more complex with time, the traffic in automotive networks increases and so does the amount of safety critical data to be monitored. With the network switch implemented according to the invention, this amount of data can be monitored at wire speed or near wire speed with little delay and the strict safety regulations of automotive networks can be satisfied. Strict firewalling of safety critical data can be enabled in order to e.g. prevent attacks and introduction of harmful content into the automotive network.

A computing unit according to the invention, especially a network switch, is configured, in particular by a computer program, to carry out an inventive method.

The implementation of the invention in the form of software is advantageous because this allows particularly low costs, especially if an executing processing unit is still being used for other tasks and therefore is present anyway. Suitable media for providing the computer program are in particular diskettes, hard drives, flash memory, EEPROM, CD-ROMs, DVDs etc. Downloading a program via computer networks (Internet, intranet, etc.) is possible.

Further advantages and developments of the invention are specified in the description and the associated drawings.

It goes without saying, that the features named above and still to be explained below can be used not only in the combination indicated respectively, but also in other combinations or in a stand-alone manner, without going beyond the scope of the present invention.

The invention is illustrated schematically in the drawings on the basis of exemplary embodiments and will be described in detail in the following with reference to the drawings.

Description of drawings
- Fig. 1: schematically shows a network configured to perform a preferred embodiment of a method according to the invention.
- Fig. 2: schematically shows a preferred embodiment of a method according to the invention as a block diagram.

### Detailed Description of the Drawing

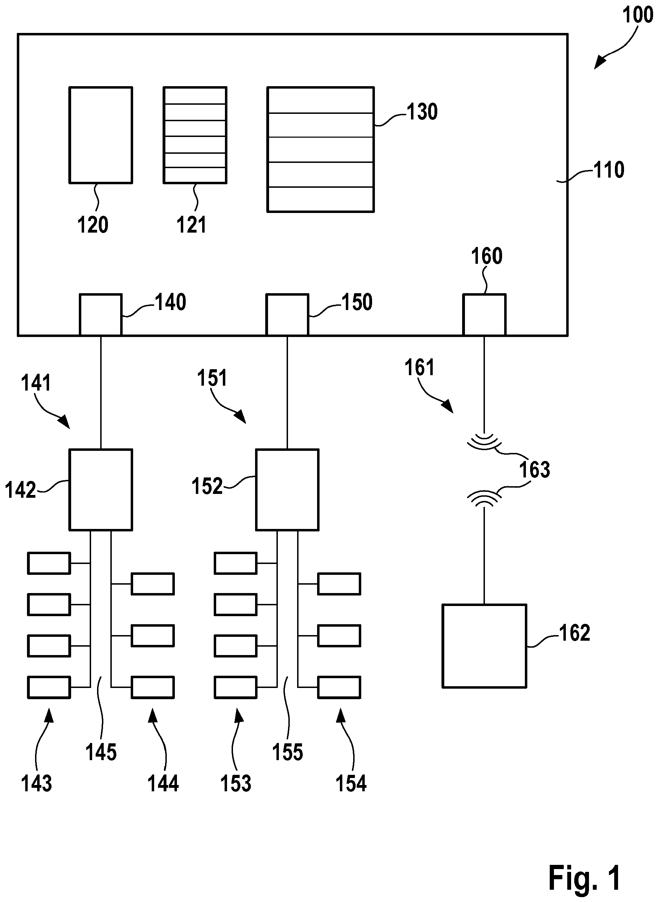

Fig. 1 schematically shows a network 100 configured to perform a preferred embodiment of a method according to the invention. The network 100 is especially an automotive network and is for example implemented in a vehicle.

A network switch being implemented as Ethernet switch 110 with a plurality of ports 140, 150, 160 is provided, with which a plurality of network members is connected. The network 100 is particularly embedded according to a domain controlled architecture, wherein different subdomains or Virtual Local Area Networks (VLAN) are connected with each other by means of the Ethernet switch 110.

A first network member 141 is connected with the network switch 110 at a port 140 and can for example be a first VLAN 141. This VLAN 141 can itself comprise several members which are connected with each other by means of a communication link 145, e.g. a CAN Bus or Ethernet. The VLAN 141 can comprise a domain controller 142, e.g. a motor control unit, several sensors 143 and actuators 144.

A second network member 151 connected with the Ethernet switch 110 at a port 150 can for example be a second VLAN with a domain controller 152, e.g. an electronic control unit (ECU) of the vehicle, sensors 153 and actuators 154 connected via a Bus system 155 like CAN. This ECU 152 can for instance control an entertainment system of the vehicle.

At a port 160 a third network member 161 is connected with the Ethernet switch 110. This third network member 161 can for example be an external server 162, with which the vehicle is connected via a wireless link 163.

It shall be understood that the network 100 can comprise further ports and further network members not shown in Fig. 1 for reasons of simplification.

In order to prevent attacks and the introduction of harmful content into the vehicle network 100, traffic between the network members is monitored by means of a firewall implemented in the Ethernet switch 110. For this purpose the Ethernet switch 110 comprises a processor unit 120, e.g. a central processing unit CPU, and content addressable memory CAM 130, preferably a ternary content addressable memory TCAM. The firewall is implemented in the Ethernet switch 110 in a co-design by software executed on the CPU 120 and by hardware in the form of the TCAM 130. Further, a memory unit 121 is provided in the Ethernet switch 110, e.g. a flash memory, to which the CPU 120 has access.

In the TCAM 130 rules concerning data transmissions between different network members are stored. Each of these rules concerns a specific data transmission between two network members, i.e. data to be transmitted from one network member to another network member, and describes attributes of the corresponding transmission.

For example, each rule can describe the following attributes:
- an individual identification number representing the corresponding rule;
- an IP-address and the Ethernet switch port of a source network member;
- an IP-address and the Ethernet switch port of a destination network member;
- a protocol for a connection between these two network members;
- a VLAN ID representing the VLAN of the destination network member;
- data or a data packet to be transmitted between these two network members;
- an action, which is performed when the attributes of received data to be transmitted match the attributes of the corresponding rule, particularly to allow or deny or transfer the data to be transmitted to the CPU 120 for further evaluation.

For example, each single rule stored in the TCAM 130 has a size of 48 bytes. There is moreover the possibility to combine several rules to a combined rule. Particularly, two rules can be combined to a double rule with a size of 96 bytes. Data to be transmitted can be evaluated in greater detail and more attributes of data to be transmitted can be evaluated by means these double rules.

In this example, there are single rules with 48 bytes as well as double rules with 96 bytes provided in the TCAM 130 yielding more flexibility since simpler single rules with smaller size as well as more complex rules with larger size can be provided.

For example, under Internet Protocol version 6 (IPv6), data to be transmitted or data packets especially have a size of 66 bytes when using User Datagram Protocol (UDP) and especially a size of 78 bytes when using Transmission Control Protocol (TCP). Under Internet Protocol version 4 (IPv4), data to be transmitted or data packets especially have a size of 46 bytes when using UDP and especially 58 bytes when using TCP.

All the above referenced data to be transmitted have a size smaller than a 96 byte double rule. However, usually data to be transmitted are dropped or denied if they are smaller than a rule. Thus, when using 96 byte double rules for the above referenced data to be transmitted there is the danger that the data transmissions are denied just because of their size, but not because of their content. This problem also occurs for IPv4 UDP data transmissions with a size of 46 bytes when using a single 48 byte rule.

When using a 48 byte single rule, the IPv6 UDP data to be transmitted with 66 bytes, the IPv6 TCP data to be transmitted with 78 bytes, and the IPv4 TCP data to be transmitted with 58 bytes are at least larger than the 48 byte single rules. However, if these data to be transmitted are transferred to the CPU 120 for further evaluation, usually the entire data to be transmitted will be evaluated by the CPU 120. Thus, also the part of the data to be transmitted, which has already been evaluated by the TCAM 130, will be evaluated again by the CPU 120 leading to an increased latency.

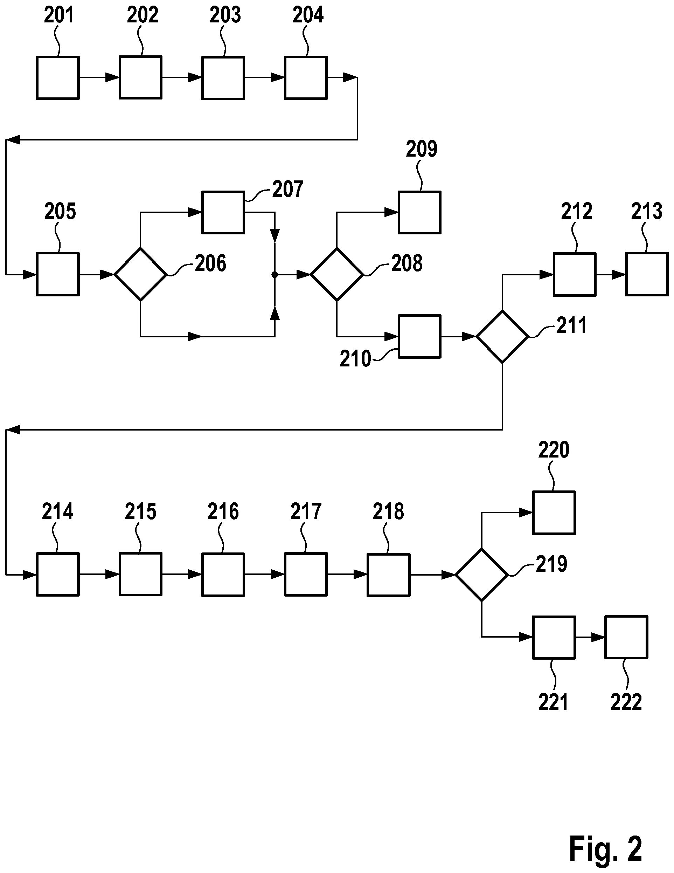

In order to overcome these disadvantages, the network switch 110 is configured to perform a preferred embodiment of a method according to the invention, which will hereafter be described with reference to Fig. 2, which schematically shows this preferred embodiment as a block diagram.

Before the network 100 is activated first of all a configuration phase is performed, in the course of which a whitelist of allowed communications and allowed data transmissions between different network members is created in step 201. Based on this whitelist, in step 202 rules for data transmissions are created and stored in the TCAM 130, particularly single 48 byte rules as well as double 96 bate rules.

In step 203 configuration data are created and stored in the memory unit 121, particularly in the form of a JSON file. These configuration data particularly comprise correlations between individual identification numbers representing corresponding rules of the TCAM 130 as well as the data of these corresponding rules.

After storing the JSON file in the memory unit 121, the configuration phase of the network 100 is particularly finished and the network 100 activated in step 204.

In step 205 during regular operation of the network 100 data to be transmitted e.g. from the domain controller 142 of the VLAN 141 to the domain controller 152 of the VLAN 151 are received at port 140 of the network switch 110. For example, these data to be transmitted are in the form of a 66 byte data packet according to IPv6 using UPD.

In step 206 it is determined, particularly by the TCAM 130 itself, whether these received data to be transmitted have a size smaller than a certain value depending on a size of the rules stored in the TCAM 130. Preferably this certain value equals the size of a double rule of 96 bytes.

If the size of the data to be transmitted is larger than the certain value of 96 bytes, the data to be transmitted are compared in step 208 with the rules stored in the TCAM 130. However, if the size of the data to be transmitted is smaller than the certain value, predetermined data are added in step 207 to the data to be transmitted such that the data to be transmitted have a size at least equal to the certain value. For example, zeros can be added as predetermined data. Afterwards the data to be transmitted are compared with the rules stored in the TCAM 130 in step 208. This way it can be achieved that no data transmission is denied just because its size is smaller than a 96 byte double rule.

When the data to be transmitted are compared with the rules stored in the TCAM 130 in step 208, the attributes of the data to be transmitted are compared with the entries of the different TCAM 130 single and double rules. These attributes of the data to be transmitted are e.g. IP-addresses and Ethernet switch ports of the source network member 142 and the destination network member 152, the protocol for a connection between these two network members like UDP, a VLAN ID representing the VLAN 151 of the destination network member 152, and the data to be transmitted between these two network members 142, 152.

When all these attributes match a rule in the TCAM 130, the corresponding action linked with that rule is performed. For example in step 209 it is selected to allow or deny the data transmission as corresponding action.

In step 210 it is e.g. selected to transfer the data to be transmitted to the CPU 120 for further evaluation as action. In this case it is determined in step 211 whether the data to be transmitted have a size larger than a threshold depending on the size of the rules stored in the TCAM 130. Preferably, this second threshold equals the size of a single rule of 48 bytes.

If this is not the case, the data to be transmitted are transferred to the CPU 120 in step 212, which further evaluates the data in step 213 and determines whether to allow or deny the data transmission.

If for example a 48 byte single rule triggers to further transfer the data to be transmitted to the CPU 120 and if the data to be transmitted have a size larger than the threshold of 48 bytes, the first 48 bytes of the data to be transmitted have already been evaluated by the TCAM 130 and match the corresponding 48 byte single rule.

In this case, i.e. if it is selected to transfer the data to be transmitted to the CPU 120 and if the data to be transmitted have a size larger than the threshold of 48 bytes, a predetermined identification number is assigned to the data to be transmitted in step 214. Particularly, the individual identification number of the configuration data created in step 203 representing the corresponding single rule, which matches the present data to be transmitted, is assigned to the data to be transmitted.

Therefore, the predetermined identification number corresponds to the rule stored in the TCAM matching the data to be transmitted and furthermore corresponds to an amount of data of the data to be transmitted which has been compared with the rules of the TCAM in step 208.

Preferably, a predetermined amount of the data to be transmitted, particularly a certain field of the data to be transmitted e.g. the field for the VLAN ID of the destination network member, is replaced with this identification number.

Afterwards, i.e. after assigning the identification number, the data to be transmitted are transferred to the CPU 120 in step 215 for further evaluation. In step 216 the CPU 120 particularly first of all reads the field or amount of data corresponding to the VLAN ID of the destination network member and therefore reads the identification number. The CPU 120 determines in step 217 whether there is an entry for this data in the configuration data, i.e. the JSON file in the memory unit 121.

Since there is an entry for the identification number in the JSON file for the corresponding 48 byte single rule, the CPU 120 knows that the first 48 bytes of the data to be transmitted have already been evaluated by the TCAM 130 in step 208. Thus, in step 218 the CPU 120 does not evaluate the first 48 bytes of the data to be transmitted again but further evaluates the data to be transmitted starting at the 49^{th} byte.

Depending on this further evaluation the CPU 120 determines in step 219 whether to allow or to deny the data transmission. If it is determined to deny the data transmission, the CPU 120 drops the data to be transmitted in step 220.

If it is determined to allow the data transmission, the CPU 120 restores in step 221 the amount of data, which has been replaced with the identification number in step 214, i.e. the VLAN ID. For this purpose, the CPU 120 can particularly restore the corresponding original data in step 221 using the JSON file stored in the memory unit 121. In step 222 the data to be transmitted are transferred to destination network member 152.

## Claims

1. A method for monitoring traffic between network members (141, 151, 161) in a network (100) by a network switch (110),
wherein in the network (100) different network members (141, 151, 161) are connected with the network switch (110) comprising a processor unit (120) and a content addressable memory CAM (130), in which rules concerning data transmissions between different network members (141, 151, 161) are stored;
wherein upon receiving (205) data to be transmitted between two network members (142, 152), the data to be transmitted are compared (208) with the rules stored in the CAM (130) and depending on a result of this comparison it is selected whether to allow (209) the data transmission or to deny (209) the data transmission or to transfer (210) the data to be transmitted to the processor unit (120);
wherein if the data to be transmitted have a size larger than a threshold which depends on the size of the rules stored in the CAM (130), only an amount of the data to be transmitted with the size of the rules stored in the CAM (130) is compared (208) with the rules stored in the CAM (130) and if it is selected (210) to transfer the data to be transmitted to the processor unit (120), a predetermined identification number is assigned (214) to the data to be transmitted
and by means of the identification number, the processor unit (120) further evaluates an amount of the data to be transmitted, which has not been compared with the rules stored in the CAM (130).

2. The method according to claim 1, wherein, if the data to be transmitted have
a size larger than the threshold, the predetermined identification number corresponds to a rule of the rules stored in the CAM (130), which matches the data to be transmitted.

3. The method according to claim 1 or 2, wherein, if the data to be transmitted
have a size larger than the threshold, the predetermined identification number corresponds to an amount of the data to be transmitted with a size equal to the second threshold.

4. The method according to any one of the preceding claims, wherein, if the
data to be transmitted have a size larger than the threshold, the predetermined identification number corresponds to an amount of the data to be transmitted which is compared with the rules of the CAM (130).

5. The method according to any one of the preceding claims, wherein, if the
data to be transmitted have a size larger than the threshold, a predetermined amount of the data to be transmitted is replaced with the predetermined identification number (214).

6. The method according to any one of the preceding claims, wherein, if the
data to be transmitted have a size larger than the threshold, configuration data are provided (203) correlating predetermined identification numbers with rules stored in the CAM (130).

7. The method according to any one of the preceding claims, wherein in the CAM (130) two or more different rules are combined to a combined rule.

8. The method according to any one of the preceding claims, wherein the threshold equals the size of one rule stored in the CAM (130) and/or equals the size of an integer multiple of one rule stored in the CAM (130).

9. The method according to any of the preceding claims, wherein the threshold equals the size of two rules stored in the CAM (130).

10. The method according to any one of the preceding claims, wherein the content addressable memory CAM (130) is a ternary content addressable memory TCAM (130).

11. Computing unit adapted to perform a method according to any one of the preceding claims.

12. A computer program which causes a computing unit to (110) perform a method according to any one of claims 1 to 10 when it is executed on the computing unit (110).

13. A machine-readable storage medium having stored there on a computer program of claim 12.

## Patentansprüche

1. Verfahren zum Überwachen von Verkehr zwischen Netzwerkmitgliedern (141, 151, 161) in einem Netzwerk (100) durch einen Netzwerk-Switch (110),
wobei in dem Netzwerk (100) verschiedene Netzwerkmitglieder (141, 151, 161) mit dem Netzwerk-Switch (110) verbunden sind, der eine Prozessoreinheit (120) und einen inhaltsadressierbaren Speicher CAM (130) umfasst, in dem Regeln bezüglich Datenübertragungen zwischen verschiedenen Netzwerkmitgliedern (141, 151, 161) gespeichert sind;
wobei bei Empfang (205) von zwischen zwei Netzwerkmitgliedern (142, 152) zu übertragenden Daten die zu übertragenden Daten mit den in dem CAM (130) gespeicherten Regeln verglichen werden und abhängig von einem Ergebnis dieses Vergleichs ausgewählt wird, ob die Datenübertragung zu erlauben (209) oder die Datenübertragung zu verweigern (209) ist oder die zu übertragenden Daten zu der Prozessoreinheit (120) zu transferieren (210);
wobei, wenn die zu übertragenden Daten eine Größe von mehr als einer Schwelle aufweisen, die von der Größe der in dem CAM (130) gespeicherten Regeln abhängt, nur eine Menge der zu übertragenden Daten mit der Größe der in dem CAM (130) gespeicherten Regeln mit den in dem CAM (130) gespeicherten Regeln verglichen wird (208), und wenn ausgewählt wird (210), die zu übertragenden Daten zu der Prozessoreinheit (120) zu übertragen, den zu übertragenden Daten eine vorbestimmte Identifikationsnummer zugewiesen wird (214)
und mittels der Identifikationsnummer die Prozessoreinheit (120) ferner eine Menge der zu übertragenden Daten evaluiert, die noch nicht mit den in dem CAM (130) gespeicherten Regeln verglichen wurde.

2. Verfahren nach Anspruch 1, wobei, wenn die zu übertragenden Daten eine Größe von mehr als der Schwelle aufweisen, die vorbestimmte Identifikationsnummer einer Regel der in dem CAM (130) gespeicherten Regeln entspricht, die mit den zu übertragenden Daten übereinstimmt.

3. Verfahren nach Anspruch 1 oder 2, wobei, wenn die zu übertragenden Daten eine Größe von mehr als der Schwelle aufweisen, die vorbestimmte Identifikationsnummer einer Menge der zu übertragenden Daten mit einer Größe gleich der zweiten Schwelle entspricht.

4. Verfahren nach einem der vorhergehenden Ansprüche, wobei, wenn die zu übertragenden Daten eine Größe von mehr als der Schwelle aufweisen, die vorbestimmte Identifikationsnummer einer Menge der zu übertragenden Daten entspricht, die mit den Regeln des CAM (130) verglichen wird.

5. Verfahren nach einem der vorhergehenden Ansprüche, wobei, wenn die zu übertragenden Daten eine Größe von mehr als der Schwelle aufweisen, eine vorbestimmte Menge der zu übertragenden Daten mit der vorbestimmten Identifikationsnummer (214) ersetzt wird

6. Verfahren nach einem der vorhergehenden Ansprüche, wobei, wenn die zu übertragenden Daten eine Größe von mehr als der Schwelle aufweisen, Konfigurationsdaten bereitgestellt werden (203), die vorbestimmte Identifikationsnummern mit in dem CAM (130) gespeicherten Regeln korrelieren.

7. Verfahren nach einem der vorhergehenden Ansprüche, wobei in dem CAM (130) zwei oder mehr verschiedene Regeln zu einer kombinierten Regel kombiniert werden.

8. Verfahren nach einem der vorhergehenden Ansprüche, wobei die Schwelle gleich der Größe einer in dem CAM (130) gespeicherten Regel ist und/oder gleich der Größe eines ganzzahligen Vielfachen einer in dem CAM (130) gespeicherten Regel ist.

9. Verfahren nach einem der vorhergehenden Ansprüche, wobei die Schwelle gleich der Größe von zwei in dem CAM (130) gespeicherten Regeln ist.

10. Verfahren nach einem der vorhergehenden Ansprüche, wobei der inhaltsadressierbare Speicher CAM (130) ein ternärer inhaltsadressierbarer Speicher TCAM (130) ist.

11. Datenverarbeitungseinheit, die dafür ausgelegt ist, ein Verfahren nach einem der vorhergehenden Ansprüche auszuführen.

12. Computerprogramm, das bewirkt, dass eine Datenverarbeitungseinheit (110) ein Verfahren nach einem der Ansprüche 1 bis 10 ausführt, wenn es auf der Datenverarbeitungseinheit (110) ausgeführt wird.

13. Maschinen-lesbares Speicherungsmedium, auf dem ein Computerprogramm nach Anspruch 12 gespeichert ist.

## Revendications

1. Procédé de surveillance de trafic entre des membres de réseau (141, 151, 161) dans un réseau (100) par un commutateur de réseau (110),
dans lequel dans le réseau (100), différents membres de réseau (141, 151, 161) sont connectés au commutateur de réseau (110) comprenant une unité de processeur (120) et une mémoire adressable par le contenu CAM (130), dans laquelle sont stockées des règles concernant des transmissions de données entre différents membres de réseau (141, 151, 161) ;
dans lequel, à la réception (205) de données à transmettre entre deux membres de réseau (142, 152), les données à transmettre sont comparées (208) aux règles stockées dans la CAM (130) et, en fonction d'un résultat de cette comparaison, il est choisi d'autoriser (209) la transmission de données ou de refuser (209) la transmission de données ou de transférer (210) les données à transmettre à l'unité de processeur (120) ;
dans lequel, si la taille des données à transmettre est supérieure à un seuil qui dépend de la taille des règles stockées dans la CAM (130), seule une quantité des données à transmettre ayant la taille des règles stockées dans la CAM (130) est comparée (208) aux règles stockées dans la CAM (130) et s'il est sélectionné (210) de transférer les données à transmettre à l'unité de processeur (120), un numéro d'identification prédéterminé est attribué (214) aux données à transmettre
et au moyen du numéro d'identification, l'unité de processeur (120) évalue en outre une quantité des données à transmettre, qui n'a pas été comparée aux règles stockées dans la CAM (130).

2. Procédé selon la revendication 1, dans lequel, si la taille des données à transmettre est supérieure au second seuil, le numéro d'identification prédéterminé correspond à une des règles stockées dans la CAM (130), qui correspond aux données à transmettre.

3. Procédé selon la revendication 1 ou 2, dans lequel, si la taille des données à transmettre est supérieure au deuxième seuil, le numéro d'identification prédéterminé correspond à une quantité de données à transmettre ayant une taille égale au second seuil.

4. Procédé selon l'une quelconque des revendications précédentes, dans lequel, si la taille des données à transmettre est supérieure au deuxième seuil, le numéro d'identification prédéterminé correspond à une quantité de données à transmettre qui est comparée aux règles de la CAM (130).

5. Procédé selon l'une quelconque des revendications précédentes, dans lequel, si la taille des données à transmettre est supérieure au deuxième seuil, une quantité prédéterminée des données à transmettre est remplacée par le numéro d'identification prédéterminé (214) .

6. Procédé selon l'une quelconque des revendications précédentes, dans lequel, si la taille des données à transmettre est supérieure au deuxième seuil, des données de configuration sont fournies (203) mettant en corrélation des numéros d'identification prédéterminés avec des règles stockées dans la CAM (130).

7. Procédé selon l'une quelconque des revendications précédentes, dans lequel dans la CAM (130) deux ou plusieurs règles différentes sont combinées en une règle combinée.

8. Procédé selon l'une quelconque des revendications précédentes, dans lequel le seuil est égal à la taille d'une règle stockée dans la CAM (130) et/ou à la taille d'un multiple entier d'une règle stockée dans la CAM (130) .

9. Procédé selon l'une quelconque des revendications précédentes, dans lequel le seuil est égal à la taille de deux règles stockées dans la CAM (130).

10. Procédé selon l'une quelconque des revendications précédentes, dans lequel la mémoire adressable par le contenu CAM (130) est une mémoire adressable par le contenu ternaire TCAM (130).

11. Unité informatique adaptée pour réaliser un procédé selon l'une quelconque des revendications précédentes.

12. Programme d'ordinateur qui amène une unité informatique (110) à réaliser un procédé selon l'une quelconque des revendications 1 à 10 lorsqu'il est exécuté sur l'unité informatique (110).

13. Support de stockage lisible par machine sur lequel est stocké un programme d'ordinateur selon la revendication 12.
